# EUROPEAN PATENT APPLICATION

(11) **EP 4 704 165 A1**
(43) Date of publication of application: **04.03.2026**
(21) Application number: 24796774.8
(22) Date of filing: 09.04.2024
(51) Int. Cl.: H01M 4/13, H01M 4/134, H01M 4/38, H01M 10/04, H01M 10/0587

(54) **POSITIVE ELECTRODE FOR SECONDARY BATTERY, AND SECONDARY BATTERY**

(30) Priority: 27.04.2023 JP 2023073809
(71) Applicant: Panasonic Intellectual Property Management Co., Ltd., Kadoma-shi, Osaka 571-0057 (JP)
(72) Inventor: FURUSAWA, Daisuke, kadoma-shi, Osaka 571-0057 (JP); KATO, Keiko, kadoma-shi, Osaka 571-0057 (JP); ISHIBASHI, Tatsuya, kadoma-shi, Osaka 571-0057 (JP)
(74) Representative: Novagraaf International SA
(86) International application number: PCT/JP2024/014361
(87) International publication number: WO 2024/225018

(57) **Abstract**

A positive electrode (11), which is an example of an embodiment, comprises: a long positive electrode core body (30); and a positive electrode mixture layer (31) disposed on both surfaces of the positive electrode core body (30). The positive electrode mixture layer (31) includes a first region (32) and a thin portion (33) that is a second region thinner than the first region (32). The thickness of the thin portion (33) is 20-98% of the average thickness of the first region (32). The thin portion (33) is provided at a length of 8% or more of the length of the positive electrode mixture layer (31) from a starting end (11x), which is one end in the length direction of the positive electrode mixture layer (31).

## Description

### TECHNICAL FIELD

The present disclosure relates to a positive electrode for a secondary battery and a secondary battery, and more specifically relates to a positive electrode constituting a wound electrode assembly and a secondary battery comprising the electrode assembly.

### BACKGROUND ART

A positive electrode constituting a wound electrode assembly typically comprises an elongated positive electrode core and a positive electrode mixture layer disposed on each of both surfaces of the positive electrode core (for example, see Patent Literature 1). Patent Literature 1 discloses an electrode plate in which a plurality of grooves are formed on a surface of a mixture layer. In a secondary battery such as a lithium-ion battery, the volume of the electrode assembly changes largely with charge and discharge. Thus, a core of the electrode plate may be elongated in a width direction, which causes, for example, plastic deformation of the core, consequently causing short circuit. To prevent such a short circuit, insulation measures are taken such as disposing insulating plates between an electrode assembly and a lead, a sealing assembly, a bottom of an exterior housing can, and the like.

### CITATION LIST

### PATENT LITERATURE

PATENT LITERATURE 1: Japanese Unexamined Patent Application Publication No. 2002-015764

### SUMMARY

It is an important challenge in the secondary battery such as the lithium-ion battery to inhibit plastic deformation of the electrode plate with charge and discharge. Inhibition of the plastic deformation of the electrode plate may simplify the insulation measures, for example, and may achieve further increase in the capacity and reduction in cost.

A positive electrode for a secondary battery according to the present disclosure is a positive electrode for a secondary battery, comprising: an elongated positive electrode core; and a positive electrode mixture layer disposed on each of both surfaces of the positive electrode core, wherein the positive electrode mixture layer includes a first region and a second region having a thickness smaller than that of the first region, the thickness of the second region is greater than or equal to 20% and less than or equal to 98% of an average thickness of the first region, and the second region is provided from one end in a length direction of the positive electrode mixture layer with a length of greater than or equal to 8% of a length of the positive electrode mixture layer.

A secondary battery according to the present disclosure is a secondary battery comprising an electrode assembly including the above positive electrode, a negative electrode, and a separator, the positive electrode and the negative electrode being wound via the separator, wherein the positive electrode is provided so that the second region is positioned on a winding core side of the electrode assembly.

The positive electrode for a secondary battery according to the present disclosure may effectively inhibit the plastic deformation of the electrode plate with charge and discharge of the battery.

### BRIEF DESCRIPTION OF DRAWING

FIG. 1 is an axial sectional view of a cylindrical battery of an example of an embodiment.
FIG. 2 is a perspective view of a positive electrode of an example of an embodiment.
FIG. 3 is a sectional view along the line AA in FIG. 2.
FIG. 4 is a sectional view of a positive electrode of another example of an embodiment.

### DESCRIPTION OF EMBODIMENTS

Hereinafter, an example of embodiments of the positive electrode for a secondary battery and the secondary battery using this positive electrode according to the present disclosure will be described in detail with reference to the drawings. Note that the positive electrode and the secondary battery according to the present disclosure are not limited to the embodiments described below.

In the embodiments described below, a cylindrical battery 10 in which a wound electrode assembly 14 is housed in a bottomed cylindrical exterior housing can 16 will be exemplified, but the exterior body of the battery is not limited to the cylindrical exterior housing can. Examples of other embodiments of the non-aqueous electrolyte secondary battery according to the present disclosure include a rectangular battery comprising a rectangular exterior housing can and a pouch battery comprising an exterior body constituted with laminated sheets including a metal layer and a resin layer.

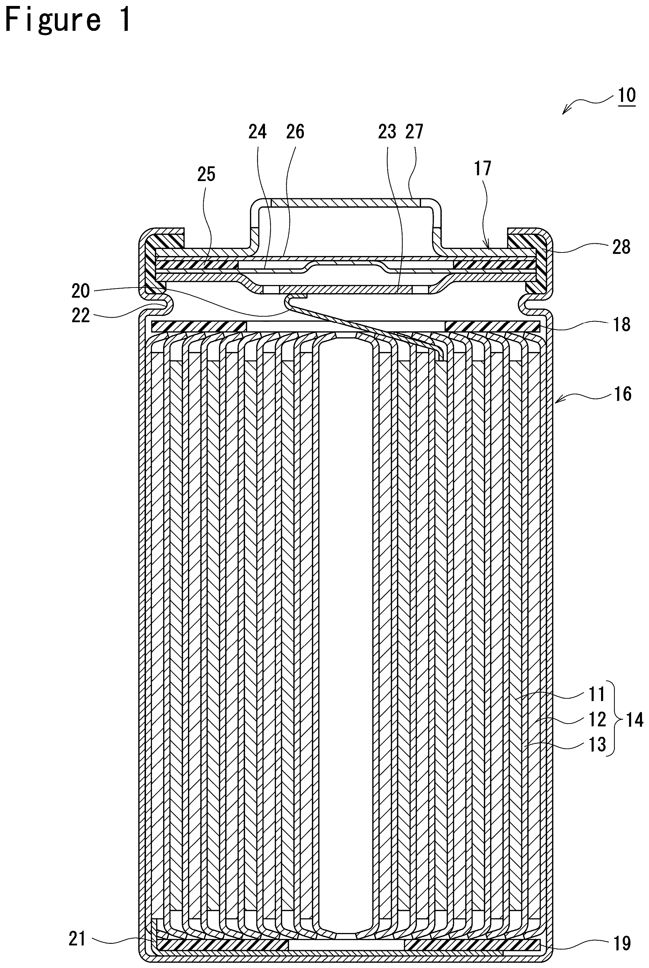

FIG. 1 is a sectional view of the cylindrical battery 10 of an example of an embodiment. As illustrated in FIG. 1, the cylindrical battery 10 comprises the electrode assembly 14 having a positive electrode 11, a negative electrode 12, and a separator 13, the positive electrode 11 and the negative electrode 12 being wound via the separator 13. The cylindrical battery 10 comprises the bottomed cylindrical exterior housing can 16 to house the electrode assembly 14 and a sealing assembly 17 to seal an opening portion of the exterior housing can 16. In the exterior housing can 16, an electrolyte is housed together with the electrode assembly 14. The exterior housing can 16 has a grooved portion 22 formed on a side wall, and the sealing assembly 17 is supported by the grooved portion 22 to seal the opening portion of the exterior housing can 16. Hereinafter, for convenience of description, the sealing assembly 17 side of the cylindrical battery 10 will be described as the upper side, and the can bottom side of the exterior housing can 16 will be described as the lower side.

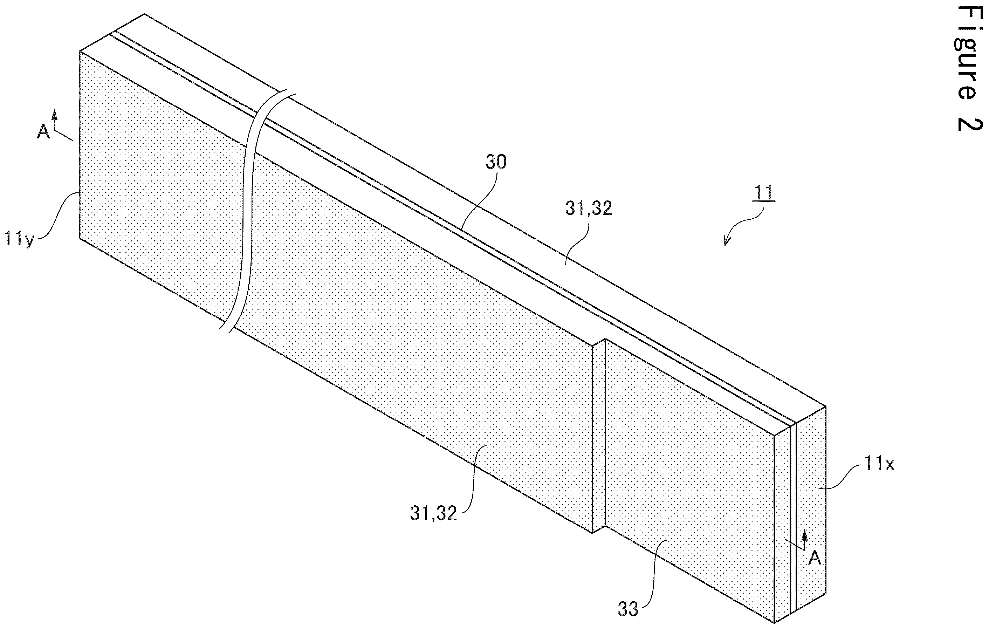

Although detail will be described later, a positive electrode mixture layer 31 constituting the positive electrode 11 includes: a first region 32; and a thin portion 33 that is a second region having a thickness smaller than that of the first region 32 (see FIG. 2 and the like). The thin portion 33 is preferably positioned on a winding core side of the electrode assembly 14. According to the cylindrical battery 10, use of the positive electrode 11 including the thin portion 33 effectively inhibits the plastic deformation of the electrode plate with charge and discharge of the battery. It is considered that a stress to act on the electrode plate during charge and discharge may be effectively relaxed by providing the specific thin portion 33, and the plastic deformation of not only the positive electrode 11 but also the negative electrode 12 is inhibited.

The electrolyte may be an aqueous electrolyte, but a non-aqueous electrolyte is used in the present embodiment. The non-aqueous electrolyte has lithium-ion conductivity. The non-aqueous electrolyte may be a liquid electrolyte (an electrolyte liquid) or may be a solid electrolyte. The cylindrical battery 10 is a non-aqueous electrolyte secondary battery, for example, and particularly preferably a lithium-ion battery.

The liquid electrolyte (the electrolyte liquid) includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted product in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, or the like can be used, for example. As the inorganic solid electrolyte, a known material for an all-solid lithium-ion secondary battery and the like (for example, an oxide-type solid electrolyte, a sulfide-type solid electrolyte, a halogen-type solid electrolyte, or the like) may be used. The polymer electrolyte includes a lithium salt and a matrix polymer, or includes a non-aqueous solvent, a lithium salt, and a matrix polymer, for example. As the matrix polymer, a polymer material that absorbs the non-aqueous solvent to form a gel is used, for example. The polymer material includes a fluororesin, an acrylic resin, and a polyether resin.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

On the outer peripheral surface of the electrode assembly 14, the negative electrode 12 may be disposed, and an exposed portion where a surface of a negative electrode core 40 constituting the negative electrode 12 is exposed may be provided. In this case, this exposed portion may be contacted with the inner peripheral surface of the exterior housing can 16 to electrically connect the negative electrode 12 and the exterior housing can 16.

A gasket 28 is provided between the exterior housing can 16 and the sealing assembly 17 to achieve sealability inside the battery. The gasket 28 also functions as an insulating member to prevent electric contact between the exterior housing can 16 and the sealing assembly 17. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16, which is crimped to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

### [Positive Electrode]

The positive electrode 11 comprises a positive electrode core 30 and a positive electrode mixture layer 31 disposed on the positive electrode core 30. For the positive electrode core 30, a foil of a metal stable within a potential range of the positive electrode 11, such as aluminum, an aluminum alloy, stainless steel, and titanium, a film in which such a metal is disposed on a surface layer thereof, and the like may be used. The positive electrode mixture layer 31 includes a positive electrode active material, a conductive agent, and a binder, and is preferably provided on each of both surfaces of the positive electrode core 30. Between the positive electrode core 30 and the positive electrode mixture layer 31 or on the positive electrode mixture layer 31, a protective layer including inorganic particles and a binder may be disposed.

The positive electrode 11 may be produced by, for example, applying a positive electrode mixture slurry including the positive electrode active material, the conductive agent, and the binder onto the positive electrode core 30, and drying and subsequently compressing the coating film to form the positive electrode mixture layer 31 on both the surfaces of the positive electrode core 30. For a dispersion medium of the positive electrode mixture slurry, N-methyl-2-pyrrolidone (NMP) is used, for example. The positive electrode mixture slurry is preferably applied onto the entire region of both the surfaces of the positive electrode core 30 except for a portion where a positive electrode lead 20 is to be connected. Although detail will be described later, the thin portion 33 of the positive electrode mixture layer 31 may be formed by controlling a method for applying the positive electrode mixture slurry, or may be formed by forming the positive electrode mixture layer 31 and then peeling a part thereof.

For the positive electrode active material, a lithium-transition metal composite oxide containing a transition metal element such as Ni, Co, and Mn is used. Examples of the metal element contained in the lithium-transition metal composite oxide include Ni, Co, Mn, Al, Be, B, Na, Mg, Si, K, Ca, Sc, Ti, V, Cr, Fe, Cu, Zn, Ga, Sr, Y, Zr, Nb, Mo, In, Sn, Sb, Ba, Ta, W, Pb, and Bi. Among these, at least one of Ni, Co, and Mn is preferably contained. An example of the preferable composite oxide includes: a lithium-transition metal composite oxide containing Ni, Co, and Mn; and a lithium-transition metal composite oxide containing Ni, Co, and Al. The lithium-transition metal composite oxide may be used singly, or a plurality of types thereof may be used in combination.

The lithium-transition metal composite oxide has, for example, a layered rock-salt structure. Examples of the layered rock-salt structure include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure. A content of the positive electrode active material is, for example, greater than or equal to 90% and less than or equal to 99% of the mass of the positive electrode mixture layer 31. A density of the positive electrode mixture layer 31 is preferably greater than or equal to 3.3 g/cc from the viewpoints of increase in the capacity of the battery, and the like, and an example thereof is greater than or equal to 3.3 cc and less than or equal to 3.8 g/cc.

Examples of the conductive agent included in the positive electrode mixture layer 31 may include carbon black such as acetylene black and Ketjenblack, graphite, carbon nanotube (CNT), carbon nanofiber, graphene, metal fiber, metal powder, and conductive whisker. The conductive agent may be used singly, or a plurality of types thereof may be used in combination. A content of the conductive agent is, for example, greater than or equal to 0.1% and less than or equal to 5% of the mass of the positive electrode mixture layer 31.

Examples of the binder included in the positive electrode mixture layer 31 may include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), and the like. The binder may be used singly, or a plurality of types thereof may be used in combination. A content of the binder are, for example, greater than or equal to 0.1 % and less than or equal to 5 % of a mass of the positive electrode mixture layer 31.

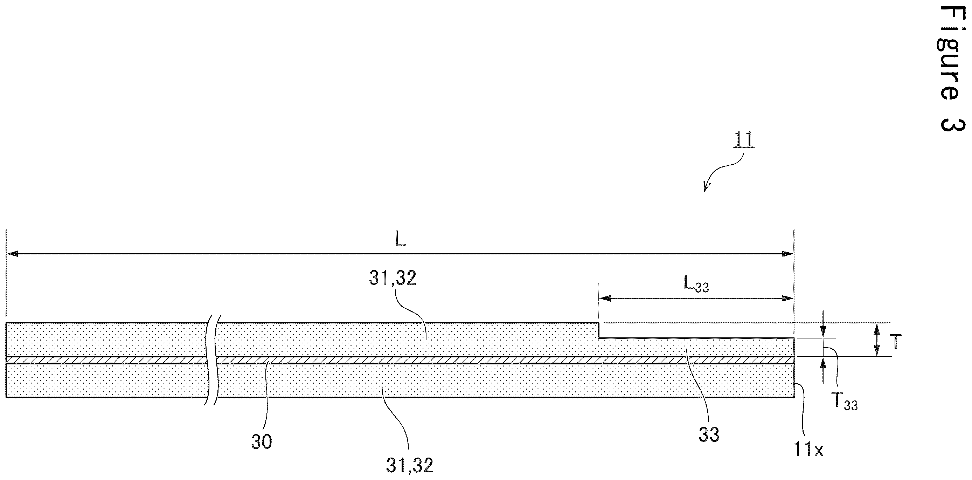

Hereinafter, with reference to FIG. 2 to FIG. 4, the thin portion 33 of the positive electrode mixture layer 31 will be described in detail. FIG. 2 is a perspective view of the positive electrode 11, and FIG. 3 is a sectional view along the line AA in FIG. 2.

As illustrated in FIG. 2 and FIG. 3, the positive electrode mixture layer 31 includes: the first region 32; and the thin portion 33 that is the second region having a thickness smaller than that of the first region 32. An average thickness of the thin portion 33 is greater than or equal to 20% and less than or equal to 98% of an average thickness T of the first region 32. The thin portion 33 is formed on a part of the positive electrode mixture layer 31, and areas of the thin portion 33 is preferably smaller than that of the first region 32 from the viewpoint of increase in the capacity of the battery.

The thickness T of the first region 32 is preferably substantially constant over the entire region, but a thickness difference of, for example, about 1% may be present. The average thickness T of the first region 32 is preferably greater than or equal to 10 µm and less than or equal to 150 µm, and more preferably greater than or equal to 50 µm and less than or equal to 120 µm on one side of the positive electrode core 30. The thickness of the first region 32 is preferably substantially equal on both the sides of the positive electrode core 30.

Thickness T₃₃ of the thin portion 33 is substantially constant over the entire region, and there may be a step with steeply changed thickness between the first region 32 and the thin portion 33 as illustrated in FIG. 3. Alternatively, the thickness T₃₃ of the thin portion 33 may gradually increase toward the first region 32 or toward both the ends in the length direction of the thin portion 33. The region where the thickness of the thin portion 33 gradually increase may be formed stepwise, or may be a gentle slope without a step. The density of the first region 32 and the thin portion 33 may be different from each other, but are substantially equal in the present embodiment. The average thickness T₃₃ of the thin portion 33 is more preferably greater than or equal to 40% and less than or equal to 90%, and particularly preferably greater than or equal to 50% and less than or equal to 85% of the average thickness T of the first region 32. The average thickness T₃₃ within the above range may efficiently inhibit the electrode plate deformation while keeping the high capacity.

In the present embodiment, the positive electrode mixture layer 31 is formed on the entire region of both the surfaces of the positive electrode core 30 except for the portion where the positive electrode lead 20 is to be connected. The positive electrode lead 20 is connected to a center portion in the length direction of the positive electrode 11, for example. Thus, a core exposed portion where the surface of the positive electrode core 30 is exposed is provided at the center portion in the length direction of the positive electrode 11. The length L of the positive electrode mixture layer 31 means a length of the positive electrode mixture layer 31 along the length direction of the positive electrode 11. The length L of the positive electrode mixture layer 31 is substantially equal to the length of the positive electrode 11 and the length of the positive electrode core 30, but exactly a length in which a length of the core exposed portion is subtracted from the length of the positive electrode core 30.

The thin portion 33 is provided from a starting end 11x being one end in the length direction of the positive electrode mixture layer 31 with a length L₃₃ of greater than or equal to 8% of the length L of the positive electrode mixture layer 31. Here, the length L₃₃ of the thin portion 33 means a length of the thin portion 33 along the length direction of the positive electrode 11. The starting end 11x refers to an end in the length direction of the positive electrode mixture layer 31 positioned on the winding core side of the electrode assembly 14. In the present embodiment, an end of an initial winding side of the positive electrode 11 and the starting end 11x of the positive electrode mixture layer 31 coincide.

The thin portion 33 is considered to absorb expansion of the negative electrode 12 by forming a minute space between the positive electrode 11 and the negative electrode 12 to relax a stress due to the expansion. Providing of the thin portion 33 in the positive electrode mixture layer 31 inhibits the plastic deformation of not only the positive electrode 11 but also the negative electrode 12. In addition, the thin portion 33 also reduces the expansion itself of the negative electrode 12 during charge to some extent. As a result, elongation of the electrode plate in the width direction may be inhibited to facilitate simplification of insulation measures, for example, insulating plates disposed on the upper and lower sides of the electrode assembly 14 may be omitted. The effect of inhibiting the plastic deformation of the electrode plate by the thin portion 33 becomes remarkable when the thin portion 33 is disposed from the starting end 11x of the positive electrode mixture layer 31 with the predetermined length range.

If the length L₃₃ of the thin portion 33 is less than 8% of the length L of the positive electrode mixture layer 31, the effect by the thin portion 33 cannot be obtained. In other words, the plastic deformation of the electrode plate is effectively inhibited when the length L₃₃ of the thin portion 33 is greater than or equal to 8% of the length L of the positive electrode mixture layer 31. The length L₃₃ of the thin portion 33 is preferably greater than or equal to 10%, more preferably greater than or equal to 15%, and particularly preferably greater than or equal to 18% of the length L of the positive electrode mixture layer 31.

The length L₃₃ of the thin portion 33 is, for example, less than or equal to 70%, more preferably less than or equal to 50%, and particularly preferably less than or equal to 40% of the length L of the positive electrode mixture layer 31. If the length L₃₃ of the thin portion 33 is excessively long, the effect of inhibiting the electrode plate deformation peaks, but in contrast, the capacity considerably decreases. Thus, the length L₃₃ of the thin portion 33 is particularly preferably less than or equal to 40%, and may be less than or equal to 35% of the length L. An example of a preferable range of the length L₃₃ is greater than or equal to 10% and less than or equal to 40%, or greater than or equal to 15% and less than or equal to 35% of the length L. The length L₃₃ within the above range may efficiently inhibit the electrode plate deformation while keeping the high capacity.

The length L₃₃ of the thin portion 33 is, for example, greater than or equal to 70 mm and less than or equal to 300 mm, more preferably greater than or equal to 100 mm and less than or equal to 300 mm, and particularly preferably greater than or equal to 120 mm and less than or equal to 250 mm. The thin portion 33 has a length of, for example, greater than or equal to 3.5 laps and less than or equal to 15 laps, more preferably has a length of greater than or equal to 5 laps and less than or equal to 10 laps of the wound structure of the electrode assembly 14 from the end of the initial winding side (the starting end 11x) of the positive electrode 11. In this case, the effect by providing the thin portion 33 becomes more remarkable. Note that an example of the length L of the positive electrode mixture layer 31 is greater than or equal to 600 mm and less than or equal to 900 mm.

The thin portion 33 may be formed in a part in the width direction of the positive electrode 11, but is preferably formed over the entire width of the positive electrode 11. Note that L₃₃ of the thin portion 33 along the length direction of the positive electrode 11 is preferably longer than the length (the width) of the thin portion 33 along the width direction of the positive electrode 11. An example of the width of the positive electrode 11 is greater than or equal to 50 mm and less than or equal to 65 mm.

In the examples illustrated in FIG. 2 and FIG. 3, the thin portion 33 is formed only on one surface of the positive electrode 11. When the thin portion 33 is formed only on one surface of the positive electrode 11, the thin portion 33 is preferably formed only on the outer winding surface of the positive electrode 11 facing the outer side of the electrode assembly 14. The mixture layer on the inner winding side of the negative electrode 12 opposite to the outer winding surface of the positive electrode 11 is considered to be easily densified compared with the mixture layer on the outer winding side, and change in volume during charge and discharge becomes larger. Thus, when the thin portion 33 is formed only on the positive electrode mixture layer 31 on the outer winding side of the positive electrode 11, the electrode plate deformation may be efficiently inhibited while keeping the high capacity.

In the present embodiment, the entire region of the positive electrode mixture layer 31 on the inner winding surface of the positive electrode 11 facing the inner side of the electrode assembly 14 is the first region 32 having a substantially constant thickness. The thin portion 33 is formed from the starting end 11x of the positive electrode mixture layer 31 on the outer winding surface only within the predetermined length range.

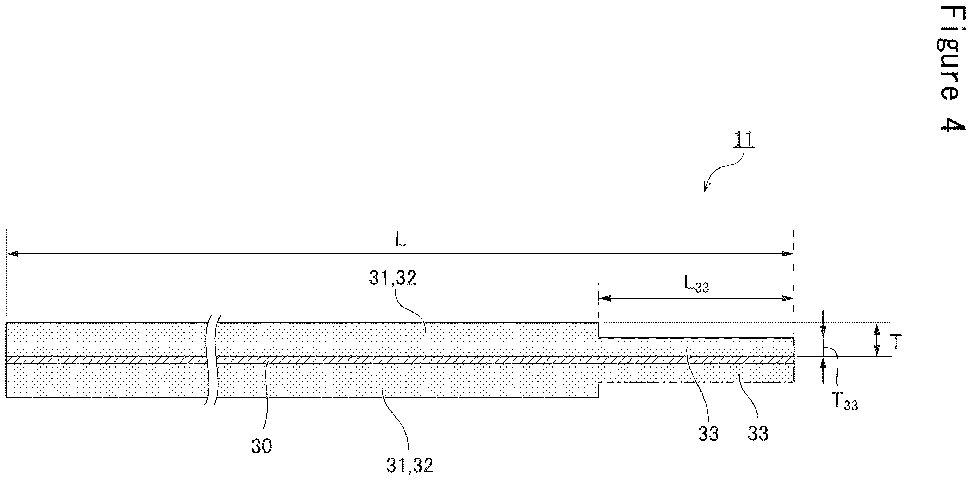

FIG. 4 is a sectional view illustrating another example of the embodiment. As illustrated in FIG. 4, the positive electrode 11 may have the thin portion 33 on both the surfaces of the positive electrode core 30. The thin portion 33 is formed from the starting end 11x of the positive electrode mixture layer 31 within a length range of greater than or equal to 8% of the length L of the positive electrode mixture layer 31, on both the outer winding surface and the inner winding surface. According to the embodiment exemplified in FIG. 4, the capacity is decreased compared with the case where the thin portion 33 is provided only on the outer winding surface of the positive electrode 11 (the embodiment exemplified in FIG. 2 and FIG. 3), but the effect of inhibiting the electrode plate deformation equivalent to or greater than that in the above case is obtained.

The thickness T₃₃ and the length L₃₃ of the thin portion 33 may be substantially equal or different on both the surfaces of the positive electrode 11. When the thickness T₃₃ and the length L₃₃ are different in each thin portion 33, the thickness T₃₃ and the length L₃₃ of the thin portion 33 positioned on the outer winding side are preferably set to be larger than the thickness T₃₃ and the length L₃₃ of the thin portion 33 positioned on the inner winding side. In this case, the electrode plate deformation may be efficiently inhibited while keeping the high capacity.

On the positive electrode 11, the thin portion 33 may be formed by, for example, reducing an amount of the positive electrode mixture slurry applied in a region in which the thin portion 33 is to be disposed compared with the other region. In this case, the thicknesses of the first region 32 and the thin portion 33 may be controlled to be within the target ranges by regulating the amount of the positive electrode mixture slurry applied. Alternatively, the positive electrode mixture slurry at a constant amount may be applied over the entire length of the positive electrode core 30, and then a part of the coating film may be peeled within a predetermined length range to form the thin portion 33.

When the electrode assembly 14 is produced, the positive electrode 11 is disposed so that the thin portion 33 is positioned on the winding core side of the electrode assembly 14, and the electrode plates and the separator 13 are wound. This forms the thin portion 33 from the starting end 11x on the initial winding side of the positive electrode 11. When the thin portion 33 is present only on one surface of the positive electrode 11, the positive electrode 11 is preferably disposed so that the thin portion 33 is positioned on the outer winding surface.

### [Negative Electrode]

The negative electrode 12 has a negative electrode core and a negative electrode mixture layer disposed on the negative electrode core. For the negative electrode core, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer 41 includes a negative electrode active material and a binder, and is preferably provided on both surfaces of the negative electrode core except for a portion where the negative electrode lead 21 is to be connected. Between the negative electrode core and the negative electrode mixture layer or on the negative electrode mixture layer, a protective layer including inorganic particles and a binder may be disposed. The negative electrode 12 may be produced by, for example, applying a negative electrode mixture slurry including the negative electrode active material and the binder on the surface of the negative electrode core, and drying and subsequently compressing the coating film to form the negative electrode mixture layer on both the surfaces of the negative electrode core.

For the binder included in the negative electrode mixture layer, a fluororesin, an olefin resin, PAN, a polyimide, a polyamide, an acrylic resin, or the like may be used as in the case of the positive electrode 11, but polyvinyl acetate, styrene-butadiene rubber (SBR), or the like may be used. Among these, SBR is preferably used. The binder may be used singly, or a plurality of types thereof may be used in combination. The negative electrode mixture layer preferably includes CMC or a salt thereof, polyacrylic acid (PAA) or a salt thereof, polyvinyl alcohol (PVA), or the like. A content of the binder is, for example, greater than or equal to 0.1% and less than or equal to 5% of the mass of the negative electrode mixture layer. Note that the negative electrode mixture layer may include a conductive agent such as CNT.

For the negative electrode active material, a carbon material that reversibly occludes and releases lithium ions is typically used. The carbon material that functions as the negative electrode active material is natural graphite, artificial graphite, or a mixture thereof, for example. For the negative electrode active material, an element that forms an alloy with Li, such as Si and Sn, a material containing the element, and the like may be used. Among these, a silicon-containing material containing Si is preferable. As the negative electrode active material, lithium titanate or the like, which has a high potential of charge and discharge relative to metal lithium compared with the carbon material and the like may also be used. The negative electrode active material may be used singly, or a plurality of types thereof may be used in combination. A content of the negative electrode active material is, for example, greater than or equal to 90% and less than or equal to 99.5% of the mass of the negative electrode mixture layer.

The negative electrode 12 preferably includes the silicon-containing material as the negative electrode active material from the viewpoint of increase in the capacity of the battery. A content of the silicon-containing material is preferably greater than or equal to 6%, more preferably greater than or equal to 8%, and particularly preferably greater than or equal to 10% of the total mass of the negative electrode active material. The constitution of the cylindrical battery 10 comprising the positive electrode 11 including the thin portion 33 includes the silicon-containing material, and is particularly suitable when the negative electrode 12 having large change in volume during charge and discharge is used. An upper limit of the content of the silicon-containing material is preferably 80%, more preferably 70%, and particularly preferably 60% of the total mass of the negative electrode active material from the viewpoints of cycle characteristics of the battery and the like.

The silicon-containing material that functions as the negative electrode active material may be any material containing Si, and an example thereof includes a silicon alloy, a silicon compound, and a composite material containing Si. Among these, the composite material containing Si is preferable. The preferable silicon-containing material (composite material) is of composite particles including an ion-conductive phase, and Si phases dispersed in the ion-conductive phase. The Si phase is constituted by dispersing Si as fine particles. The ion-conductive phase is, for example, at least one selected from the group consisting of a silicate phase, a carbon phase, a silicide phase, and a silicon oxide phase, and may contain at least one element selected from the group consisting of group I elements and group II elements of the periodic table. The ion-conductive phase is a continuous phase constituted by aggregation of particles finer than the Si phase.

The composite material may have a conductive layer coating a surface of the ion-conductive phase. The conducive layer is constituted with a material having higher conductivity than the ion-conductive phase, and forms a good conductive path in the negative electrode mixture layer. The conductive layer is, for example, a carbon coating constituted with a conductive carbon material. As the conductive carbon material, carbon black such as acetylene black and Ketjenblack, graphite, formless carbon having low crystallinity (amorphous carbon), and the like may be used. A thickness of the conductive layer is preferably greater than or equal to 1 nm and less than or equal to 200 nm, or greater than or equal to 5 nm and less than or equal to 100 nm with considering achievement of conductivity and diffusibility of Li ions toward the inside of the particles.

An example of the preferable composite material containing Si is of composite particles that have a sea-island structure in which fine Si is substantially uniformly dispersed in an amorphous silicon oxide phase, and that is represented entirely by the general formula SiOₓ (0 < x ≤ 2). The main component of silicon oxide may be silicon dioxide. The silicon oxide phase may be doped with Li. A content ratio (x) of oxygen to Si is, for example, 0.5 ≤ x < 2.0, and preferably 0.8 ≤ x ≤ 1.5.

Another example of the preferable composite material containing Si includes composite particles having a sea-island structure in which fine Si is substantially uniformly dispersed in an amorphous silicate phase. A preferable silicate phase is a lithium silicate phase containing Li. The lithium silicate phase is, for example, a phase of a composite oxide represented by the general formula Li_{2z}SiO_{(2+z)} (0 < z < 2). The lithium silicate phase preferably contains Li₂SiO₃ (Z=1) or Li₂Si₂O₅ (Z=1/2) as a main component from the viewpoints of stability, productivity, Li-ion conductivity, and the like.

Another example of a preferable composite material containing Si is of composite particles having a sea-island structure in which fine Si is substantially uniformly dispersed in a carbon phase. The carbon phase is preferably an amorphous carbon phase. The carbon phase may include a crystalline component, but preferably includes more amorphous component than the crystalline component. The composite material may include particles in which the ion-conductive phase is an amorphous carbon phase. The amorphous carbon phase is constituted with, for example, a carbon material having greater than 0.34 nm of an average spacing of a (002) face measured by X-ray diffraction. The composite material including the carbon phase may have a conductive layer different from the carbon phase, or may not have the conductive layer.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. The separator 13 may have, for example: a multi-layered structure including a thermoplastic resin layer such as a polyolefin and a cellulose fiber layer; a bilayer structure of polyethylene (PE) / polypropylene (PP); or a three-layer structure of PE/PP/PE.

On an interface between the separator 13 and at least one of the positive electrode 11 and the negative electrode 12, a filler layer including an inorganic filler may be disposed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13. On a surface of the separator 13, a highly heat-resistant resin layer (a heat-resistant layer) such as an aramid resin may be disposed. The separator 13 may have a substrate composed of the porous sheet and the filler layer or the heat-resistant layer disposed on the substrate, for example.

### EXAMPLES

Hereinafter, the present disclosure will be further described with Examples, but the present disclosure is not limited to these Examples.

### <Example 1>

### [Production of Positive Electrode]

As a positive electrode active material, lithium nickelate containing cobalt and aluminum (LiNi_{0.88}Co_{0.09}Al_{0.03}O₂) was used. The positive electrode active material, acetylene black, and polyvinylidene fluoride were mixed at a solid-content mass ratio of 98:1:1, and N-methylpyrrolidone (NMP) was used as a dispersion medium to prepare a positive electrode mixture slurry. This slurry was applied onto both surfaces of a positive electrode core composed of elongated aluminum foil having a thickness of 15 µm, and the coating film was dried and compressed to form a positive electrode mixture layer (average thickness on one side: 90 µm, density: 3.6 g/cm³) on both the surfaces of the positive electrode core. Note that a core exposed portion where a positive electrode lead was to be connected was remained at a center portion in the length direction of the positive electrode core, and the positive electrode mixture layer was formed on the entire region of the positive electrode core except for the exposed portion.

Within a length range of 11% (80 mm) of the length of the positive electrode mixture layer from one end in the length direction of the positive electrode mixture layer, a part of the positive electrode mixture layer on one side was peeled to obtain a positive electrode in which a thin portion was formed with a thickness of 85% of an average thickness of the other region (a first region) in the positive electrode mixture layer. The thickness of the thin portions was substantially constant, which was 76.5 µm ± 0.5 µm. A positive electrode lead made of aluminum was welded to the core exposed portion of the positive electrode with ultrasonic wave.

### [Production of Negative Electrode]

As a negative electrode active material, a mixture of graphite powder and a Si-containing material at a mass ratio of 90:10 was used. The negative electrode active material, a dispersion of styrene-butadiene rubber, and sodium carboxymethylcellulose were mixed at a solid-content mass ratio of 98:1:1, and water as a dispersion medium was used to prepare a negative electrode mixture slurry. This slurry was applied onto both surfaces of a negative electrode core composed of elongated copper foil having a thickness of 8 µm, and the coating film was dried and compressed to obtain a negative electrode in which a negative electrode mixture layer (average thickness on one side: 94 µm, density: 1.6 g/cm³) was formed on both the surfaces of the negative electrode core. Note that a core exposed portion was remained at an end portion in the length direction of the negative electrode core, and the negative electrode mixture layer was formed on the entire region of the negative electrode core except for the exposed portion. A negative electrode lead made of nickel was welded to the core exposed portion with ultrasonic wave.

### [Production of Electrode Assembly]

The positive electrode, the negative electrode, and a separator made of polyethylene were spirally wound by using a cylindrical winding core member, and a winding-stop tape was attached to both end portions in an axial direction on the outermost peripheral surface to obtain a wound electrode assembly. In this time, the positive electrode was disposed so that the thin portion of the positive electrode mixture layer was positioned on the winding core side of the electrode assembly and faced on the outer side of the electrode assembly. After the wound structure of the electrode assembly was formed, the winding core member was removed to obtain the wound electrode assembly in which a cavity was formed at the winding core portion.

### [Preparation of Non-Aqueous Electrolyte Liquid]

Into 100 parts by mass of a mixed solvent in which ethylene carbonate (EC) and dimethyl carbonate (DMC) were mixed at a volume ratio (25°C) of 1:3, 5 parts by mass of vinylene carbonate (VC) was added, and LiPF₆ was dissolved at 1.5 mol/L to prepare a non-aqueous electrolyte liquid.

### [Production of Cylindrical Battery]

Insulating plates were disposed on the upper and lower sides of the electrode assembly, then the negative electrode lead was welded to an inner surface of a can bottom of a bottomed cylindrical exterior housing can, the positive electrode lead was welded to an internal terminal plate of a sealing assembly, and the electrode assembly was housed in the exterior housing can. Thereafter, the non-aqueous electrolyte liquid was injected into the exterior housing can by a pressure-reducing method, and an opening portion of the exterior housing can was sealed with a sealing assembly via a gasket to obtain a cylindrical battery.

### <Examples 2 to 4>

Positive electrodes and cylindrical batteries were produced in the same manner as in Example 1 except that the length of the thin portion of the positive electrode mixture layer was changed to a length of, respectively, 18%, 31%, and 56% of the length of the positive electrode mixture layer.

### <Examples 5 to 8>

Positive electrodes and cylindrical batteries were produced in the same manner as in Example 2 except that the thickness of the thin portion of the positive electrode mixture layer was changed to a thickness of, respectively, 98%, 60%, 40%, and 20% of the average thickness of the first region.

### <Comparative Example 1>

A positive electrode and a cylindrical battery were produced in the same manner as in Example 1 except that the thin portion of the positive electrode mixture layer was not formed.

### <Comparative Examples 2 and 3>

Positive electrodes and cylindrical batteries were produced in the same manner as in Example 1 except that the length of the thin portion of the positive electrode mixture layer was changed to a length of, respectively, 4% and 7% of the length of the positive electrode mixture layer.

### <Comparative Example 4>

A positive electrode and a cylindrical battery were produced in the same manner as in Example 2 except that the thickness of the thin portion of the positive electrode mixture layer was changed to a thickness of 99% of the average thickness of the first region.

### [Evaluation of Plastic Deformation of Electrode Plate (Electrode Plate Elongation)]

Each of the batteries of Examples and Comparative Examples subjected to the following cycle test was unpacked to take the positive electrode, and a width of the positive electrode was measured to determine the maximum value to calculate a ratio of the width of the positive electrode (the elongation rate) after the cycle test relative to the width of the positive electrode before the cycle test. Table 1 shows the evaluation results. The evaluation results shown in Table 1 were values relative to the elongation rate of the positive electrode of Comparative Example 1 being 100, and a smaller value thereof means that the plastic deformation of the positive electrode is more inhibited.

### [Cycle Test]

Under a temperature environment at 25°C, each of the batteries of Examples and Comparative Examples was charged at a constant current of 0.3 C until a battery voltage reached 4.2 V. Thereafter, the battery was discharged at a constant current of 0.5 C until the battery voltage reached 2.5 V. These charge and discharge were performed with 100 cycles.

**[Table 1]**

| | Thin portion | | | | Electrode plate elongation |
|---|---|---|---|---|---|
| | Length (mm) | Length (%) | Length (laps) | Thickness (%) | |
| Comparative Example 1 | 0 | 0 | 0 | 100 | 100 |
| Comparative Example 2 | 30 | 4 | 1.7 | 85 | 100 |
| Comparative Example 3 | 50 | 7 | 2.5 | 85 | 100 |
| Comparative Example 4 | 130 | 18 | 5.4 | 99 | 100 |
| Example 1 | 80 | 11 | 3.6 | 85 | 88 |
| Example 2 | 130 | 18 | 5.4 | 85 | 76 |
| Example 3 | 220 | 31 | 8.3 | 85 | 71 |
| Example 4 | 400 | 56 | 13.0 | 85 | 68 |
| Example 5 | 130 | 18 | 5.4 | 98 | 96 |
| Example 6 | 130 | 18 | 5.4 | 60 | 55 |
| Example 7 | 130 | 18 | 5.4 | 40 | 43 |
| Example 8 | 130 | 18 | 5.4 | 20 | 40 |

As shown in Table 1, the batteries of Examples exhibited a small elongation rate of the electrode plate (the positive electrode) after the cycle test compared with the batteries of Comparative Examples, and the plastic deformation of the electrode plate was inhibited. For example, in the cases where the length of the thin portion was greater than or equal to 18% (130 mm) of the length of the positive electrode mixture layer and the thickness of the thin portion was less than or equal to 85% of the thickness of the first region (Examples 2 to 4 and 6 to 8), the effect of inhibiting the electrode plate deformation was more remarkable. Note that, even when the thin portion was provided in the positive electrode mixture layer, a case where the length thereof was less than 8% of the length of the positive electrode mixture layer or a case where the thickness thereof was greater than 98% of the thickness of the first region did not yield the effect by the thin portion (see Comparative Examples 2 to 4).

The present disclosure will be further described with the following embodiments.

Constitution 1: A positive electrode for a secondary battery, comprising: an elongated positive electrode core; and a positive electrode mixture layer disposed on each of both surfaces of the positive electrode core, wherein the positive electrode mixture layer includes a first region and a second region having a thickness smaller than that of the first region, the thickness of the second region is greater than or equal to 20% and less than or equal to 98% of an average thickness of the first region, and the second region is provided from one end in a length direction of the positive electrode mixture layer with a length of greater than or equal to 8% of a length of the positive electrode mixture layer.

Constitution 2: The positive electrode for a secondary battery according to Constitution 1, wherein the length of the second region is less than or equal to 40% of the length of the positive electrode mixture layer.

Constitution 3: The positive electrode for a secondary battery according to Constitution 1 or 2, wherein the length of the second region is greater than or equal to 70 mm and less than or equal to 300 mm.

Constitution 4: A secondary battery, comprising an electrode assembly including the positive electrode for a secondary battery according to any one of Constitutions 1 to 3, a negative electrode, and a separator, the positive electrode and the negative electrode being wound via the separator, wherein the positive electrode is provided so that the second region is positioned on a winding core side of the electrode assembly.

Constitution 5: The secondary battery according to Constitution 4, wherein the second region has a length of greater than or equal to 5 laps and less than or equal to 10 laps from an end of an initial winding side of the positive electrode.

Constitution 6: The secondary battery according to Constitution 4 or 5, wherein the second region is formed only on an outer winding surface of the positive electrode facing an outer side of the electrode assembly.

Constitution 7: The secondary battery according to any one of Constitution 4 to 6, wherein the negative electrode includes a silicon-containing material at an amount of greater than or equal to 6% of a total mass of a negative electrode active material.

### REFERENCE SIGNS LIST

10 Cylindrical battery, 11 Positive electrode, 11x Starting end, 12 Negative electrode, 13 Separator, 14 Electrode assembly, 16 Exterior housing can, 17 Sealing assembly, 18 Upper insulating plate, 19 Lower insulating plate, 20 Positive electrode lead, 21 Negative electrode lead, 22 Grooved portion, 23 Bottom plate, 24 Lower vent member, 25 Insulating member, 26 Upper vent member, 27 Cap, 28 Gasket, 30 Positive electrode core, 31 Positive electrode mixture layer, 32 First region, 33 Thin portion (second region)

## Claims

1. A positive electrode for a secondary battery, comprising:
an elongated positive electrode core; and
a positive electrode mixture layer disposed on each of both surfaces of the positive electrode core, wherein
the positive electrode mixture layer includes a first region and a second region having a thickness smaller than that of the first region,
the thickness of the second region is greater than or equal to 20% and less than or equal to 98% of an average thickness of the first region, and
the second region is provided from one end in a length direction of the positive electrode mixture layer with a length of greater than or equal to 8% of a length of the positive electrode mixture layer.

2. The positive electrode for a secondary battery according to claim 1, wherein the length of the second region is less than or equal to 40% of the length of the positive electrode mixture layer.

3. The positive electrode for a secondary battery according to claim 1, wherein the length of the second region is greater than or equal to 70 mm and less than or equal to 300 mm.

4. A secondary battery, comprising an electrode assembly including the positive electrode for a secondary battery according to any one of claims 1 to 3, a negative electrode, and a separator, the positive electrode and the negative electrode being wound via the separator,
wherein the positive electrode is provided so that the second region is positioned on a winding core side of the electrode assembly.

5. The secondary battery according to claim 4, wherein the second region has a length of greater than or equal to 5 laps and less than or equal to 10 laps from an end of an initial winding side of the positive electrode.

6. The secondary battery according to claim 4, wherein the second region is formed only on an outer winding surface of the positive electrode facing an outer side of the electrode assembly.

7. The secondary battery according to claim 4, wherein the negative electrode includes a silicon-containing material at an amount of greater than or equal to 6% of a total mass of a negative electrode active material.
